# EUROPÄISCHE PATENTSCHRIFT

(11) **EP 0 268 085 B1**
(45) Veröffentlichungstag und Bekanntmachung des Hinweises auf die Patenterteilung: **25.01.1995**
(21) Anmeldenummer: 87115200.5
(22) Anmeldetag: 17.10.1987
(51) Int. Cl.: H02K 49/10

(54) **Magnetkreiselpumpe**
Magnetic circulation pump
Pompe de circulation magnétique

(30) Priorität: 25.10.1986 DE 3636404
(43) Veröffentlichungstag der Anmeldung: 25.05.1988
(73) Patentinhaber: Richter Chemie-Technik GmbH, D-47906 Kempen (DE)
(72) Erfinder: Wienen, Kurt, D-4172 Straelen (DE); Mersch, Alfred, D-4100 Duisburg 17 (DE); Krahmer-Möllenberg, Hans-Peter, D-4155 Grefrath 2 (DE)
(74) Vertreter: COHAUSZ HASE DAWIDOWICZ & PARTNER

(56) Entgegenhaltungen:
- EP-A- 0 111 764
- DE-A- 3 413 930
- FR-A- 2 077 161
- FR-A- 2 353 165
- GB-A- 2 145 882
- US-A- 4 404 055

## Beschreibung

Die Erfindung bezieht sich auf Magnetkreiselpumpen und betrifft insbesondere einen neuartigen Spalttopf für solche Magnetkreiselpumpen.

Magnetkreiselpumpen werden dort eingesetzt, wo es auf absolute Dichtigkeit nach außen ankommt, da giftige, ätzende oder aggressive Medien ohne Ümweltbelastung gepumpt werden sollen. Solche Pumpen haben vorzugsweise eine geeignete Kunststoffauskleidung. Im hochaggressiven Einsatzbereich werden hierfür hauptsächlich Fluor-Kunststoffe verwendet.

In solchen Magnetkreiselpumpen ist zwischen den kraftübertragenden Magneten des inneren und des äußeren Rotors ein Spalttopf eingebaut, welcher im inneren Bereich gleichfalls vor einem Angriff durch das Medium geschützt werden muß.

Die herkömmlichen Spalttöpfe basieren auf folgenden drei Konstruktionsprinzipien:
1. Vollkunststofftopf
2. Metalltopf mit Kunststoffeinsatz oder - auskleidung oder emailliert
3. Keramiktopf .

Alle drei Lösungen haben jedoch entschiedene Nachteile bzw. Einsatzgrenzen.

Der Vollkunststofftopf hat sehr niedrige Einsatzgrenzen bei Druck- und/oder Temperaturbelastung. Die erreichbaren und von der entsprechenden DIN vorgeschriebenen Pumpenleistungen lassen sich nicht beherrschen, so daß dieser Spalttopfytp nur einen kleinen Leistungsbereich abdeckt.

Beim Metalltopf mit Kunststoff- oder Emailschutz werden durch die Rotation der äußeren und inneren Magnete Wirbelströme induziert. Dies führt zu Leistungsübertragungsverlusten und Erwärmung des Metalls zwischen den Magneten.

Die Erwärmung kann je nach übertragener Leistung beträchtlich sein. Durch die isolierende Wirkung der Kunststoffschicht wird die Wärmeabfuhr durch das Medium verringert. Dadurch kann die Temperatur des metallischen Spalttopfes so hoch werden, daß sich der Kunststoffchutz deformiert. Beim emaillierten Spalttopf wird die entstehende Wärme in das Medium abgeführt. Dies kann dazu führen, daß die Flüssigkeit verdampft oder kavitiert, insbesondere wenn das Medium bereits mit höheren Temperaturen in die Pumpe strömt. Der Einsatz bei heißen Medien wird in beiden Fällen eingeschränkt; bei Trockenlauf, ohne Mediumkühlung des Spalttopfes, können sehr schnell durch Wirbelströme unerlaubte Temperaturgrenzen erreicht werden. Die auftretenden Leistungsverluste müssen druch einen größeren Motor und höheren Stromverbrauch ausgeglichen werden.

Ein Keramikspalttopf muß aus Festigkeitsgründen (Zugkräfte sind nicht materialgerecht) sehr dickwandig ausgeführt werden. Dies vergrößert den Magnetabstand und verringert dadurch die übertragbare Leistung. Da das Material sehr stoßempfindlich ist, kann bei Betriebsstörungen (Gleitlagerschaden oder Druckstöße) der Spalttopf zerstört werden, was zum Auslaufen der Flüssigkeit führt.

Ziel der Erfdindung ist eine druck- und temperaturfeste und chemisch beständige Kreiselpumpe mit Magnetantrieb für die Chemische Industrie, die die vorgenannten Nachteile nicht aufweist.

Dieses Ziel wird mit einer Magnetkreiselpumpe gemäß den Patentansprüchen erreicht.

Die gestellten Anforderungen werden also durch eine Verbundkonstruktion von zwei Spallttöpfen aus elektrisch nicht leitenden Materialien erfüllt. Der äußere Topf aus Faserverbundwerkstoff, wie z.B. kohlefaserverstärktem Kunststoff (CFK) oder kohlefaserverstärktem Kohlenstoff (CFC) nimmt die Kräfte auf; er wird durch den inneren Topf aus korrosionsbeständigem Material, wie z.B. einem geeigneten Kunststoff, vor Mediumberührung geschützt.

Die Spalttöpfe sind so geformt, daß in der Topfwandung zwischen den Magneten nur Zugkräfte auftreten, die durch Faserverbundwerkstoffe sehr gut aufgenommen werden. Dies wird dadurch ermöglicht, daß die Fasern im Verbundwerkstoff in einer bestimmten Richtung orientiert sind. Die Wandstärke in diesem Bereich kann sehr dünn ausgeführt werden. Dies hat einen geringen Magnetabstand und somit eine große Magnetkraft zur Folge. Topfboden und Anschlußflansch, in denen auch Biegung auftritt, können problemlos dickwandiger gestaltet werden.

Da der äußere Spalttopf aus Faserverbundwerkstoff wie z.B. durch Kohlefasernverstärktem Epoxidharz, keine Wirbelströme und somit keine Wärme erzeugt, kann der innere Spalttopf aus Kunststoff, vorzugsweise hoch korrosionsbeständigem Fluorkunststoff bestehen.

Die Erfindung wird nachstehend anhand der Zeichnung an einem Ausführungsbeispiel erläutert:

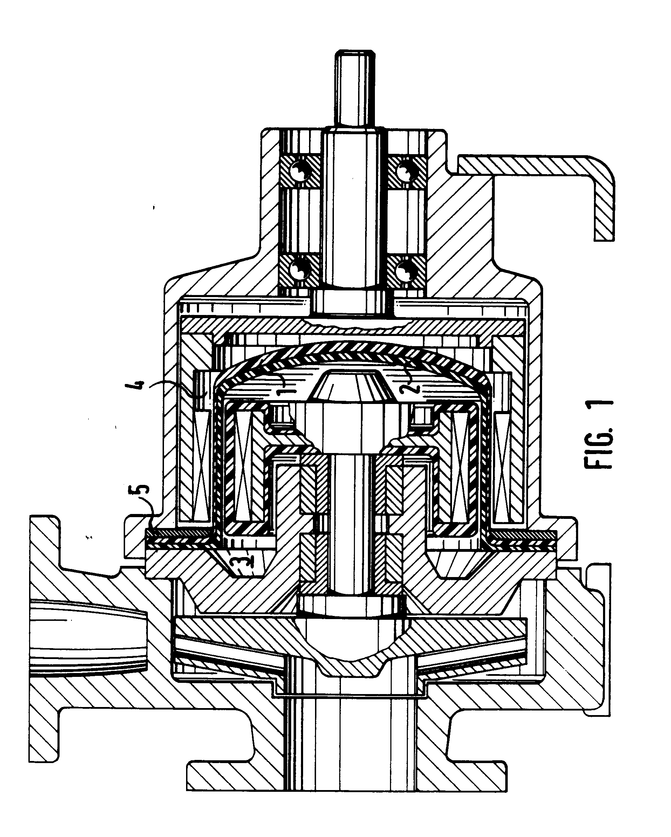

Figur 1 zeigt einen Längsschnitt durch die Pumpe.

Die Pumpe wird durch die Spalttöpfe 1 und 2 in den Produktraum 3 und den Antriebsraum 4 unterteilt, ohne daß bewegliche Dichtungen eingesetzt sind.

Der äußere Spalttopf 1 ist aus einem elektrisch nicht leitenden Faserverbundwerkstoff hergestellt und nimmt die auftretenden Druckkräfte vom gepumpten Medium auf. Der Spalttopf ist so geformt, daß in der Topfwand nur Zugspannungen auftreten, weshalb er dünnwandig ausgeführt ist. Topfboden und Flansch sind dickwandiger ausgeführt, und der Flansch ist zusätzlich durch einen Metallring 5 abgestützt, da in diesen Bereichen keine Magnetkräfte wirksam sind.

Der äußere Topf 1 wird durch den inneren Spalttopf 2 vor Korrosion durch das zu pumpende Medium geschützt. Dieser Topf 2 ist je nach Anforderung aus einem geeigneten elektrisch nicht leitenden, korrosionsbeständigen Material, im vorliegenden Falle aus hoch korrosionsbeständigem Fluorkunststoff, gefertigt.

Die innere rotierende Einheit der erfindungsgemäßen Magnetkreiselpumpe (Laufrad, Welle und Magnetrotor) kann in einer am Topfboden angebrachten Lagerung geführt sein, jedoch ist eine derartige Führung nicht unbedingt erforderlich.

## Patentansprüche

1. Magnetkreiselpumpe mit einem gegen das gepumpte Medium dichtenden Spalttopf (1, 2) mit faserverstärktem, chemisch beständigem Werkstoff, auf dessen Außenseite ein mit Permanentmagneten bestückter Rotor mit einem Antriebsmotor und auf dessen Innenseite ein mit Permanentmagneten bestückter Rotor mit dem Laufrad verbunden ist dadurch gekennzeichnet, daß der Spalttopf aus zwei ineinander gesteckten, elektrisch nicht leitenden Spalttöpfen (1, 2) besteht, wobei der innere Spalttopf (2) aus einem chemisch beständigen Kunststoff und der äußere Spalttopf (1) aus einem faserverstärkten Kunststoff besteht.

2. Pumpe nach Anspruch 1, dadurch gekennzeichnet, daß die innere rotierende Einheit, bestehend aus Laufrad, Welle und Magnetrotor, nicht am Topfboden gelagert ist.

3. Kreiselpumpe nach Anspruch 1, dadurch gekennzeichnet, daß die innere rotierende Einheit bestehend aus Laufrad, Welle und Magnetrotor, in einer am Topfboden angebrachten Lagerung geführt wird.

## Revendications

1. Pompe centrifuge magnétique avec un pot de fente (1, 2) fermant hermétiquement contre le milieu pompé en matériau résistant chimiquement renforcé par des fibres, sur le côté extérieur duquel un rotor équipé d'aimants permanents est relié à un moteur d'entraînement et sur le côté intérieur duquel un rotor équipé d'aimants permanents est relié à la roue mobile,
caractérisée en ce que le pot de fente est constitué de deux pots de fente (1, 2) électriquement non conducteurs enfoncés l'un dans l'autre, le pot de fente intérieur (2) étant constitué en une matière synthétique chimiquement résistante et le pot de fente extérieur (1) en une matière synthétique renforcée par des fibres.

2. Pompe selon la revendication 1
caractérisée en ce que l'unité intérieure rotative, constituée d'une roue mobile, d'un arbre et d'un rotor magnétique, n'est pa0.s montée sur le fond du pot.

3. Pompe centrifuge selon la revendication 1,
caractérisée en ce que l'unité intérieure rotative, constituée d'une roue mobile, d'un arbre et d'un rotor magnétique, est guidée dans un logement monté sur le fond du pot.

## Claims

1. A magnetic circulation pump having a can (1, 2) with a fibre-reinforced chemically resistant material which provides a seal against the pumped medium and on whose outside a rotor equipped with permanent magnets is connected to a driving motor, and on whose inner side a rotor equipped with permanent magnets is connected to the impeller, characterized in that the can comprises two interfitting electrically non-conductive cans (1, 2), the inner can (2) consisting of a chemically resistant plastics and the outer can (1) consisting of a fibre-reinforced plastics.

2. A pump according to claim 1, characterized in that the inner rotary unit, consisting of impeller, shaft and magnetic rotor, is not mounted on the can end.

3. A circulation pump according to claim 1, characterized in that the inner rotary unit, comprising impeller, shaft and magnetic rotor, is disposed in a bearing disposed on the can end.
